# EUROPEAN PATENT APPLICATION

(11) **EP 3 648 480 A1**
(43) Date of publication of application: **06.05.2020**
(21) Application number: 18203784.6
(22) Date of filing: 31.10.2018
(51) Int. Cl.: H04W 4/00, H04W 8/02, H04W 8/12, H04W 48/18

(54) **CORE NETWORK RESOURCE SELECTION FOR ROAMING TERMINALS**

(71) Applicant: NTT DOCOMO, INC., Chiyoda-ku Tokyo 100-6150 (JP)
(72) Inventor: SAMA, Malla Reddy, 80687 Munich (DE); THAKOLSRI, Srisakul, 80687 Munich (DE); MINOKUCHI, Atsushi, Tokyo, 100-6150 (JP)
(74) Representative: Viering, Jentschura & Partner mbB Patent- und Rechtsanwälte

(57) **Abstract**

According to an embodiment, a component of a communication network is described comprising a receiver configured to receive, from a communication terminal, a registration request and/or a session establishment request and an indication of a home network of the communication terminal, a determiner configured to determine a core network component of the communication network for serving the communication terminal based on the home network of the communication terminal and a controller configured to initiate registration of the communication terminal in the communication network and/or establishment of a session for the communication terminal based on the determined core network component.

## Description

The present disclosure relates to network components, communication terminals, methods for serving a communication terminal and methods for using a communication network.

A core network of a mobile radio communication network according to 5G typically includes multiple core network slices, wherein each core network slice serves for providing a certain communication service, for example V2X (Vehicle-to-Everything) or eMBB (enhanced Mobile Broadband). In various embodiments, it may be desirable that roaming mobile terminals (also referred to as inbound roamer terminals), i.e. mobile terminals for which the current communication network is not the home network, are served separately from non-roaming mobile terminals. For example, it may be desirable that roaming mobile terminals are served by one or more dedicated core network slices. Accordingly, approaches are desirable allowing to assign roaming mobile terminals to specific network slices.

According to an embodiment, a component of a communication network is provided including a receiver configured to receive, from a communication terminal, a registration request and/or a session establishment request and an indication of a home network of the communication terminal, a determiner configured to determine a core network component of the communication network for serving the communication terminal based on the home network of the communication terminal and a controller configured to initiate registration of the communication terminal and/or establishment of a session for the communication terminal in the communication network based on the determined core network component.

According to a further embodiment, a communication terminal is provided including a determiner configured to determine an identification of a home network of the communication terminal and transmitter configured to transmit a registration request and/or a session establishment request along with an indication of the home network of the communication terminal to a visited communication network.

According to further embodiments, a method for serving a communication terminal and a method for using a communication network according to the network component and the communication terminal described above are provided.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
- Figure 1: shows a radio communication system.
- Figure 2: shows a home network of a user and a visited network for the user.
- Figure 3: shows a communication network having network slices for roaming users.
- Figure 4: shows a communication network having network slices for roaming users of different enterprises.
- Figure 5: illustrates Single Network Slice Selection Assistance Information.
- Figure 6: shows a message flow diagram for informing a radio access network about network slice association.
- Figure 7: shows a message flow diagram for informing a discovery function about network slice association.
- Figure 8: shows a message flow diagram illustrating a registration procedure and a PDU (protocol data unit) session establishment procedure for a UE in a visited network.
- Figure 9: shows a network component of a communication network.
- Figure 10: shows a flow diagram illustrating a method for serving a communication terminal by a communication network.
- Figure 11: shows a communication terminal.
- Figure 12: shows a flow diagram illustrating a method for using a communication network.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

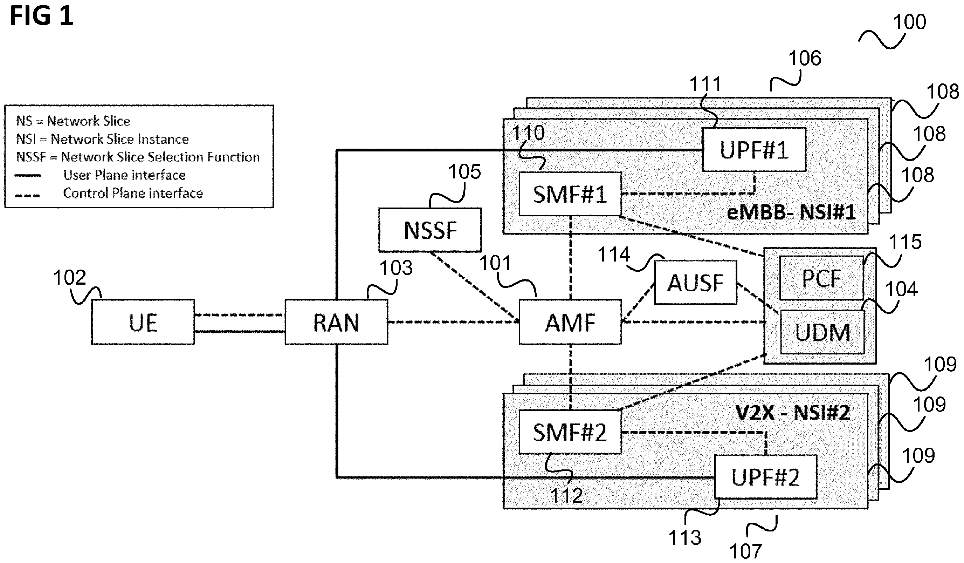

Figure 1 shows a radio communication system 100.

The radio communication system 100 includes a mobile radio terminal device 102 such as a UE (user equipment), a nano equipment (NE), and the like. The mobile radio terminal device 102, also referred to as subscriber terminal, forms the terminal side while the other components of the radio communication system 100 described in the following are part of the mobile radio communication network side, i.e. part of a mobile radio communication network (e.g. a Public Land Mobile Network - PLMN).

Furthermore, the radio communication system 100 includes a radio access network 103, which may include a plurality of radio access network nodes, i.e. base stations configured to provide radio access in accordance with a 5G (Fifth Generation) radio access technology (5G New Radio). It should be noted that the radio communication system 100 may also be configured in accordance with LTE (Long Term Evolution) or Wi-Fi (radio wireless local area networking) or another mobile radio communication standard but 5G is herein used as an example. Each radio access network node may provide a radio communication with the mobile radio terminal device 102 over an air interface. It should be noted that the radio access network 103 may include any number of radio access network nodes.

The radio communication system 100 further includes a core network including an Access and Mobility Management Function (AMF) 101 connected to the RAN 103, a Unified Data Management (UDM) 104 and a Network Slice Selection Function (NSSF) 105. Here and in the following examples, the UDM may further consist of the actual UE's subscription database, which is known as, for example, the UDR (Unified Data Repository). The core network further includes an AUSF (Authentication Server Function) 114 and a PCF (Policy Control Function) 115.

The core network may have multiple (core) network slices 106, 107 and for each network slice 106, 107, the operator may create multiple network slice instances (NSIs) 108, 109. In this example, the core network includes a first core network slice 106 with three core network slice instances (CNIs) 108 for providing Enhanced Mobile Broadband (eMBB) and a second core network slice 107 with three core network slice instances (CNIs) 109 for providing Vehicle-to-Everything (V2X).

Typically, when a network slice is deployed, network functions (NFs) are instantiated, or (if already instantiated) referenced to form a network slice instance (NSI) and network functions that belong to a network slice instance are configured with a network slice instance identification.

Specifically, in this example, each instance 108 of the first core network slice 106 includes a first Session Management Function (SMF) 110 and a first User Plane Function (UPF) 111 and each instance 109 of the second core network slice 107 includes a second Session Management Function (SMF) 112 and a second User Plane Function (UPF) 113.

A user of a mobile terminal 102 typically has a subscription for a certain communication network, i.e. a contract with an operator of a communication network (e.g. corresponding to the network side of the communication system 100, i.e. the communication system 100 without the UE 102). That communication network is his home network, e.g. HPLMN (Home Public Land Mobile Network). When being out of the coverage area of his home network, a user may use a communication network of a different operator, for example when he/she is in another country than his/her home country, which then acts as visited network for the user. Or within a country, he/she is connected to another PLMN then the subscribed PLMN.

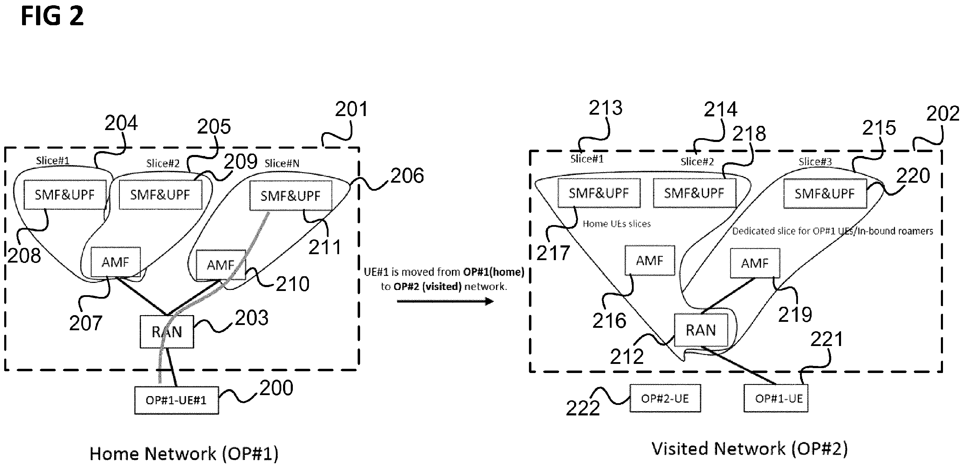

Figure 2 shows a home network 201 of a user and a visited network 202 for the user.

The home network 201 is operated by a first operator OP#1 and the visited network is operated by a second operator OP#2.

The home network includes a RAN 203 and a plurality of network slices, wherein a first network slice 204, a second network slice 205 and an N-th network slice 206 are shown. The first network slice 204 and the second network slice 205 share an AMF 207 and each include an SMF&UPF 208, 209 (i.e. an SMF and an UPF, combined here for simplicity). The N-th network slice 206 includes an AMF 210 and an SMF&UPF 211.

The visited network includes a RAN 212 and a plurality of network slices, wherein a first network slice 213, a second network slice 214 and an third network slice 215 are shown. The first network slice 213 and the second network slice 214 (grouped to a set of network slices serving non-roaming UEs) may share an AMF 216 and each include an SMF&UPF 217, 218. The third network slice 215 includes an AMF 219 and an SMF&UPF 220.

The operators OP#1 and OP#2 may have a mutual agreement that OP#2 creates a dedicated slice to serve all UEs of Operator#1, when those UEs move to the visited OP#2 network and would like to have core network access. In the illustrated example, a mobile terminal 221 of a user having a subscription with OP#1 (and being equipped with a subscriber identity module (SIM) identifying the mobile terminal 221 as a subscriber of OP#1) is served by the third network slice 215 because the third network slice 215 is dedicated for roamers (roaming terminals or users) of OP#1. A mobile terminal 222 of a user having a subscription with OP#2 is instead served by the first network slice 213 and the second network slice 214 of OP#2's network since these are used for serving subscribers of OP#2.

In other words, OP#2 has a slice separation between roaming UEs (also referred to as inbound roamer UEs) and non-roaming UEs.

Another example of slice separation would be that OP#2 does not want to mix the home traffic with visited traffic. In this case, OP#2 may create a dedicated slice (the third slice 215 in the example of figure 2) for in-bound roamers. For example, OP#2 provides dedicated services in the third slice 215 which are not provided to the home UEs of OP#2 (e.g. tourist information or advertisements etc.) In this case, all in-bound roaming terminals are connected to the third slice 215.

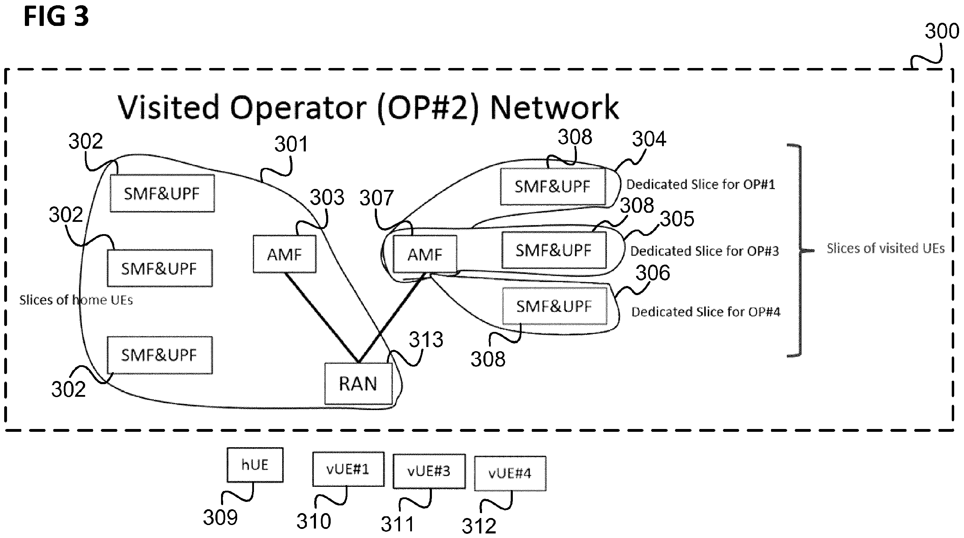

An operator may also create a dedicated slice for each roaming partner with specific SLA (service level agreement) requirements as illustrated in figure 3.

Figure 3 shows a communication network 300 of an operator OP#2.

The communication network 300 includes slices 301 for home UEs, i.e. home slices for users having a subscription with OP#2. The home slices 301 include SMF&UPFs 302, and a shared AMF 303. Furthermore, the communication network 300 has dedicated slices 304, 305, 306 having a shared AMF 307 and each having an SMF&UPF 308.

UEs 309, 310, 311, 312 may access the core network comprising slices 301, 304, 305, 306 via a RAN 313.

A UE 309 having a subscription with OP#2 is served by one of the home slices 301. A UE 310 having a subscription with OP#1 is served by a first dedicated slice 304. A UE 311 having a subscription with OP#3 is served by a second dedicated slice 305. A UE 312 having a subscription with OP#4 is served by a second dedicated slice 306.

This means that when a roaming UE 310, 311, 312 from other operators (i.e. OP#1, OP#3, OP#4) visits the network 300, the network 300 routes the UE 310, 311, 312 to the slice 304, 305, 306 dedicated to the respective roaming partner.

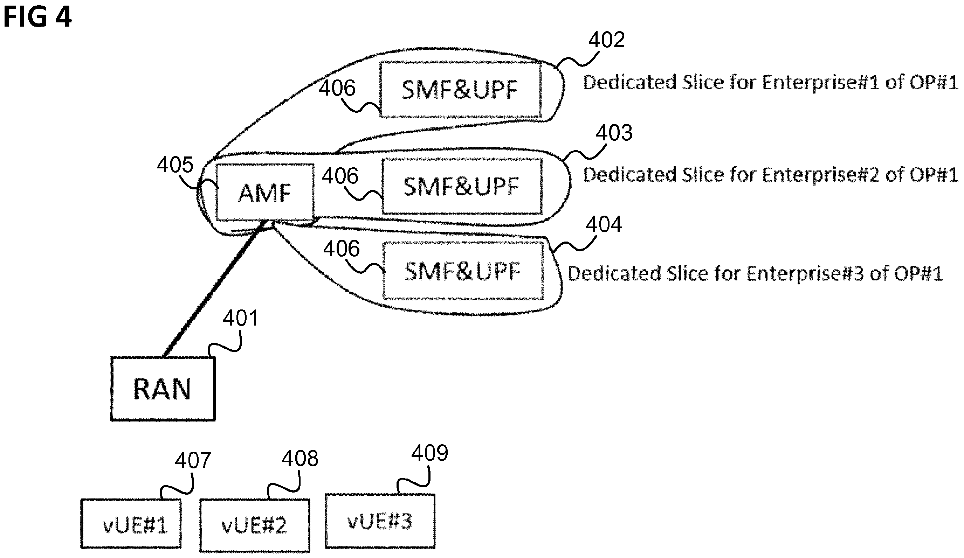

An operator (e.g. OP#1) may also have different slices dedicated to an enterprise partner as illustrated in figure 4 and may guarantee to the enterprise to provide the same SLA in a roaming scenario (e.g. in a network of OP#2). For this, the operator OP#1 may have a roaming agreement for their enterprise partner with another operator (e.g. OP#2).

Figure 4 shows a communication network 400 of an operator OP#2.

The communication network 400 includes a RAN 401, home slices (not shown) and dedicated slices 402, 403, 404 sharing an AMF 405 and each having an SMF&UPF 406. The dedicated slices are dedicated to subscribers of OP#1 and to different enterprises (enterprise#1, enterprise#2, and enterprise #3).

A UE 307 having a subscription with OP#1 and belonging to enterprise#1 is served by a first dedicated slice 402. A UE 308 having a subscription with OP#1 and belonging to enterprise#2 is served by a second dedicated slice 403. A UE 409 having a subscription with OP#1 and belonging to enterprise#3 is served by a third dedicated slice 404.

For example, OP#1 may have an SLA agreement with the enterprises (enterprise#1, enterprise#2 and enterprise #3) and may create a dedicated slice for each enterprise. OP#1 may have agreements with other operators (e.g. OP#2) around the world that if a UE of one of the enterprises moves to the network of one of the other operators, then this UE will get the same SLA as in the OP#1 network. For this, the other operators, OP#2 in this example, creates dedicated slices 402, 403, 404 for the enterprises. If a UE of one of the enterprises visits OP#2's network, then OP#2's network will move the UE to the respective dedicate slice 402, 403, 404.

A network slice is identified by an S-NSSAI (Single Network Slice Selection Assistance Information).

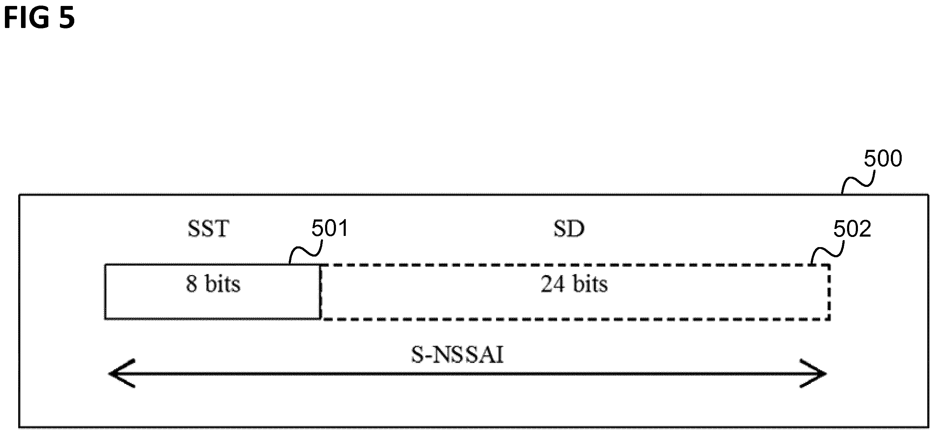

Figure 5 illustrates an S-NSSAI 500.

The S-NSSAI 500 is included of:
- A Slice/Service type (SST) 501, which refers to the expected Network Slice behaviour in terms of features and services; and
- A Slice Differentiator (SD) 502 which is optional information that complements the slice/service type(s) to differentiate amongst multiple network slices of the same slice/service type.

NSSAI may include one or more S-NSSAIs.

Allowed NSSAI is NSSAI provided by the serving PLMN (Public Land Mobile Network) during e.g. a registration procedure, indicating the (one or more) S-NSSAI values allowed by the network for a UE in the serving PLMN for the current registration area.

Configured NSSAI is NSSAI that has been provisioned in the UE. It may be applicable to one or more PLMNs.

SST can for example be eMBB (enhanced Mobile Broadband), CIoT (Cellular Internet of Things), etc., and SD can for example be enterprise#1, enterprise#2 etc.

In case of roaming, a UE may be configured with a visited PLMN S-NSSAI value which is provided by the UE for selecting the right slice for a visited UE. The UE may thus for example be routed to an SMF&UPF 208 via RAN 203 and AMF 207.

It should be noted that the AMF selection functionality in the 5G RAN may consider the following factors for selecting the AMF Set:
- AMF Region ID and AMF Set ID derived from GUAMI (Global Unique AMF Identifier).
- Requested NSSAI.
- Local operator policies.

AMF selection functionality in the 5G RAN or control plane (CP) network functions (NFs) typically considers the following factors for selecting an AMF from the AMF Set:
- Availability of candidate AMFs.
- Load balancing across candidate AMFs (e.g. considering weight factors of candidate AMFs in the AMF Set).

The following factors may be considered during the SMF selection:
- Selected Data Network Name (DNN), S-NSSAI, NSI(network slice instance)-ID
- Subscription information from UDM, e.g.
   - per DNN (Data Network Name): whether LBO roaming is allowed.
   - per S-NSSAI: the subscribed DNN(s).
   - per (S-NSSAI, subscribed DNN): whether LBO (Local Breakout) roaming is allowed.
- per (S-NSSAI, subscribed DNN): whether EPC (Evolved Packet Core) interworking is supported.
- Local operator policies.
- Load conditions of the candidate SMFs.
- Access technology being used by the UE.

It should further be noted that an NG-RAN (i.e. a 5G RAN) may be shared among the multiple operators, i.e. provide access to core networks of different operators by a N2/N3 interface. For this, the NG-RAN may broadcast the available PLMN-IDs (of the various core networks) to the UEs in its coverage area. A UE may decode the broadcast system information and take the information concerning available PLMN IDs into account in PLMN and cell (re-)selection procedures. The UE may inform the NG-RAN of the selected PLMN so that the NG-RAN can route correctly. The NG-RAN informs the core network of the selected PLMN.

According to various embodiments, to allow a visited network to select a correct network slice (e.g. a dedicated slice for a roaming UE), a UE provides an identification of the roaming partner to which it belongs (i.e. of the network or operator of which it is a subscriber).

In the example of the visited network 202 operated by OP#2 in figure 2, the UE 221, being a subscriber of OP#1 (i.e. belongs to the home network 201), provides an identification of its home network 201.

This means that in a scenario where a roaming partner (OP#1) has a dedicated isolated slice (third slice 215, including e.g. a dedicated AMF 219, SMF and UPF 220) for roaming partner UEs (i.e. OP#1's subscribers) a roaming partner UE 221 provides, e.g. during initial registration with the visited network 202, for example the following values to the RAN 212:
- Requested NSSAI
- Identifier to identify the roaming partner (OP#1 in this case, e.g. the PLMN ID of the UE's home network 201 or Home Network Identifier from the Subscription Concealed Identifier (SUCI))

The RAN selects the AMF of a dedicated slice using the identifier to identify the roaming partner (e.g. the PLMN ID of the UE's home network 201 or a Home Network Identifier from the SUCI (Subscription Concealed Identifier)or combination of Requested NSSAI and identifier to identify the roaming partner. If for some reason, the RAN is not able to select the dedicated/slice specific AMF 307, the RAN selects the default AMF, then default AMF selects the dedicated AMF 307 using roaming partner identification. The default AMF can select the dedicated AMF 307 via NRF and/or via NSSF using roaming partner identification.

In the case of an AMF 307 shared among network slices 304, 305, 305 dedicated for different roaming partners (OP#1, OP#3, OP#4) as illustrated in figure 3, where there is a dedicated SMF&UPF 308 for each of the dedicated network slices 304, 305, 305, the shared AMF 307 may select the SMF for a roaming UE 310, 311, 312 using the identifier to identify the roaming partner (e.g. the PLMN ID of the UE's home network or a Home Network Identifier from the SUCI) or the combination of Requested NSSAI and identifier to identify the roaming partner. For selecting the SMF, the AMF 307 may perform the discovery with the NRF using identifier to identify the roaming partner.

There are multiple options for identifying the roaming partner. As a first option, as mentioned above, a roaming UE 221, 310, 311, 312 may provide the PLMN ID of its home network, for example in the RRC (i.e. on radio resource control layer) to the RAN 212, 313.

A second option is to dedicate some bits in the SD field 502 of the NSSAI which the roaming UE 221, 310, 311, 312 communicates to the visited network 202, 300 for roaming partner identification (i.e. for identification of its home network or home network operator). For example, the starting first four bits in the SD 502 may be dedicated to identify the roaming partner to which the UE 221, 310, 311, 312 belongs. In this case, the UE not necessarily needs to provide the PLMN ID.

As a third option, an identification in form of an additional (i.e. new) parameter may be introduced.

As a fourth option, a Home Network Identifier from the Subscription Concealed Identifier (SUCI) may be used.

In the case of network slices 402, 403, 404 dedicated to different enterprises as in the example of figure 4, a roaming UE 407, 408, 409 may provide the S-NSSAI and the PLMN ID in the RRC to the RAN 401 and the RAN 401 selects the AMF 405 based on a combination of S-NSSAI and PLMN ID.

As an alternative, the UE 407, 408, 409 provides the S-NSSAI in the RRC to the RAN 401 wherein the SD field 502 carries an identification of the roaming partner to which the UE belongs. In this case, it is not necessary that the PLMN ID is carried on RRC layer.

For example, OP#1 maps SD#1 to enterprise#1.

According to one embodiment, the UE 407 belonging to enterprise #1 provides the S-NSSAI (SST and SD#1) and the PLMN ID of OP#1's network in the RRC to the RAN 401 (of OP#2). Based on the S-NSSAI and the PLMN ID combination the RAN (401) selects the AMF 405 dedicated to OP#1. If for some reason, the RAN is not able to select the dedicated AMF 405, the RAN selects the default AMF, then default AMF selects the dedicated AMF 405 (optionally via NSSF and/or via NRF) using roaming partner identification.

According to the alternative, the UE 407 provides the S-NSSAI (SST and SD#1) in the RRC to the RAN 401 wherein the first four bits in the SD field 502 identify its home network (or home network operator OP#1) and the remaining bits identify enterprise#1. Based on this combination, the RAN 401 selects the AMF 405 dedicated to OP#1.

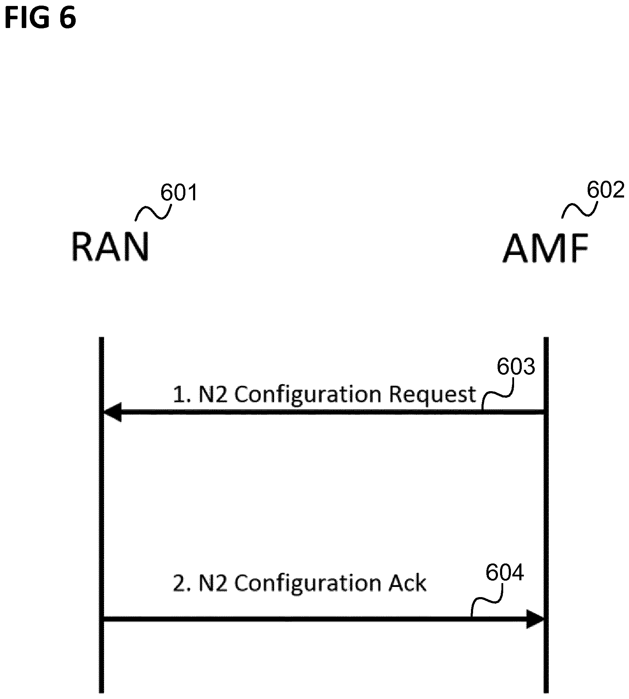

Figure 6 shows a message flow diagram 600 for informing the RAN 601 about the slice association (on node level).

In 603, an AMF 602, e.g. corresponding to AMF 219 or AMF 307, sends, during N2 configuration AMF capability information to the RAN 601, which for example corresponds to the RAN 212 or RAN 313.

The AMF capability information includes:
- An indication of the supported S-NSSAIs.
   According to one embodiment, as described above, the SD field 502 is used by a UE to identify the roaming partner to which it belongs.
- The AMF identifier of the AMF 602.
- An identification of one or more roaming partners whose UE's the AMF 602 serves (for example, AMF 219 includes the PLMN ID and/or Home Network Identifier from the SUCI of OP#1's network 201 in the AMF capability information).

In 604, the RAN 601 acknowledges the AMF request of 603 to the AMF 602.

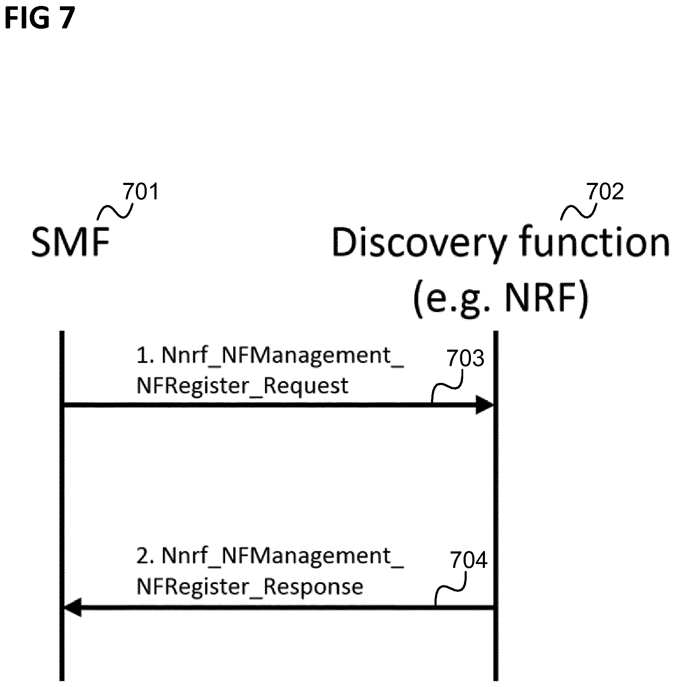

Figure 7 shows a message flow diagram 700 for informing a discovery function (e.g. a network repository function) 702 about the slice association (on node level).

In 703, an SMF 702, e.g. corresponding to SMF&UPF 220 or one of SMF&UPFs 308, sends, during service registration, NRF capability information to the discovery function 702. The discovery function for example belongs to the visited network 202 or 300.

The SMF or UPF capability information includes:
- An indication of the supported S-NSSAIs.
   According to one embodiment, as described above, the SD field 502 is used by a UE to identify the roaming partner to which it belongs.
- An NF type, NF ID and NF services of the SMF 701.
- An identification of one or more roaming partners whose UE's the SMF 701 serves (for example, SMF or UPF 220 includes the PLMN ID and/or Home Network Identifier from the SUCI of OP#1's network 201 in the NRF capability information.)

In 704, the discovery function 702 acknowledges the SMF request of 703 to the SMF 701.

Similarly to 703 and 704, the AMF also performs service registration, NRF capability information to the discovery function e.g. AMF capability information includes the an identification of one or more roaming partners whose UE's the AMF serves (for example, AMF includes the PLMN ID and/or Home Network Identifier from the SUCI of OP#1's network 201 in the NRF capability information.)

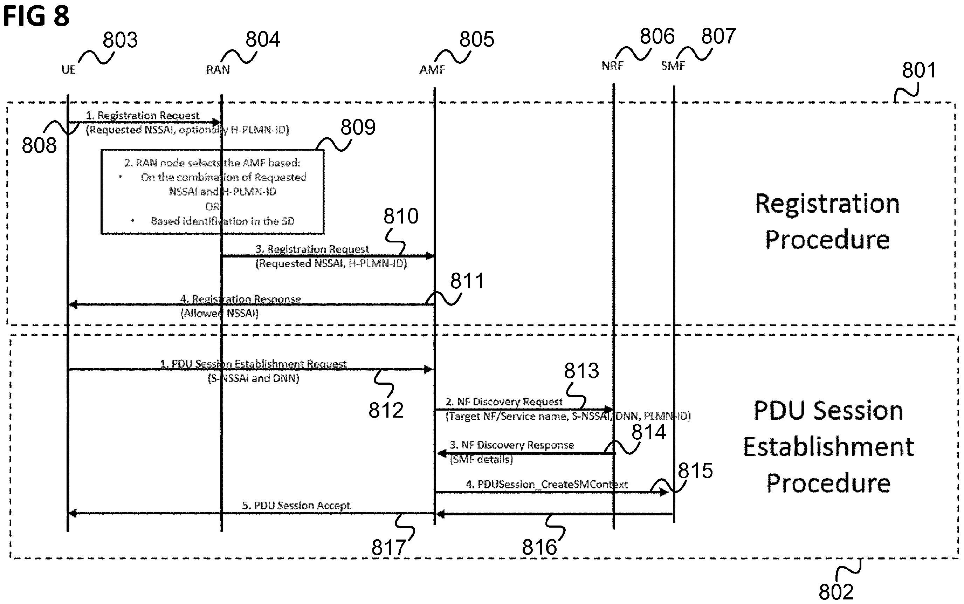

Figure 8 shows a message flow diagram 800 illustrating a registration procedure (in a first sub-diagram 801) and a PDU session establishment procedure (in a second sub-diagram 802) for a UE 803 in a visited network.

The message flow takes place between the UE 803 and a RAN 804, an AMF 805, an NRF 806 and an SMF 807 of the visited network (i.e. of the communication network to which the UE 803 roams).

In 808, the UE 803 sends a registration request to the RAN 804. The registration request includes the requested NSSAI and, according to one embodiment, an identification of the UE's home network (e.g. as PLMN ID of its home network or Home Network Identifier from the SUCI).

In 809, the respective node of the RAN 804, e.g. the base station of the RAN 804 receiving the registration request, selects an AMF based on the combination of requested NSSAI and the identification of the UE's home network in an embodiment in which it was included in the registration request. In an embodiment where the UE does not include it in the registration request, the UE 803 identifies its home network by selecting the SD in the NSSAI accordingly and the RAN 804 selects the AMF based on an identification of the UE's home network by the SD.

In 810, the RAN 804 forwards the registration request to the (selected) AMF 805. The AMF 805 then performs registration of the UE 803 and sends, in 811, a registration response with an allowed NSSAI to the UE 803. In a case where the RAN selected a different (e.g. the default) AMF and after that a dedicated/slice specific AMF, this different (default) AMF performs the AMF selection of the specific slice via NRF or via NSSF. After discovery via NRF and selection via NSSF, the default AMF forwards the request to the selected dedicated AMF.

For PDU (protocol data unit) session establishment the UE 803 in 812 sends a PDU session establishment request including an S-NSSAI and a DNN to the AMF 805.

In 813, the AMF 805 sends an NF discovery request to the NRF 806 including a target NF/service name, the S-NSSAI, the DNN and an identification of the UE's home network (e.g. the UE's home network PLMN ID or Home Network Identifier from the SUCI). The UE's home network may already be known to the AMF 805, e.g. from the registration procedure. Alternatively, the UE 803 may inform the AMF 805 of its home network via the PDU session establishment request, i.e. send an indication of its home network along with (e.g. included in) the PDU session establishment request.

In 814, the NRF discovers the SMF based on a combination of the S-NSSAI, the DNN and an identification of the UE's home network (e.g. the UE's home network PLMN ID) and then the NRF 806 responds with an NF discovery response including SMF details.

In 815, the AMF 805 sends a request to create an SM context to the SMF 807.

In 816, the SMF 807 responds to the AMF 805 and the AMF 805 sends a PDU session accept message to the UE 803 in 817.

Similarly to 813, the SMF may perform the discovery via NRF 806.

The approaches described above may also be used for network component selection (or slice selection, i.e. generally dedicated network part selection) in case of other communication networks than 5G networks.

For example, in case of an EPC (Evolved Packet Core) network, for MME Selection, if UE assisted DCN (dedicated core network) selection feature is supported and a DCN-ID is provided by the UE, the DCN-ID is used in the eNodeB for MME selection to maintain the same DCN when the serving MME is not available.

For example, a roaming partner of an operator operates a communication network having a dedicated core network for roaming UEs of the operator (i.e. UEs having a subscription with the operator, i.e. UEs for which the operator's network is their home network), for example a dedicated MME, a dedicated SGW (Serving Gateway) and a dedicated PGW (Packet Data Network Gateway).

During initial attach of a roaming UE, the roaming UE provides below values to the RAN of the communication network:
- DCN-ID
- Identifier to identify the operator (of its home network, e.g. PLMN ID of its home network).

The RAN selects the MME of a DCN using the Identifier to identify the roaming partner or a combination of the Identifier to identify the roaming partner and the DCN-ID. In case the RAN routes the UE to a default MME, then this MME selects the dedicated MME of using the identifier to identify the roaming partner or a combination of the identifier to identify the roaming partner and the DCN-ID, or a combination of the identifier to identify the roaming partner and the DCN-ID and a UE Usage Type.

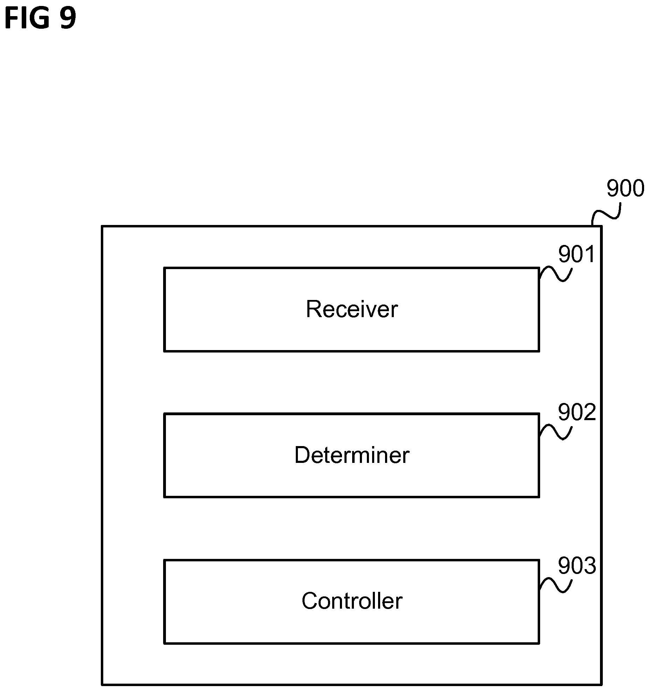

In summary, according to various embodiments, a network component is provided as illustrated in figure 9.

Figure 9 shows a component 900 of a communication network.

The network component 900 includes a receiver 901 configured to receive, from a communication terminal, a registration request and/or a session establishment request and an indication of a home network of the communication terminal.

The network component 900 further includes a determiner 902 configured to determine a core network component of the communication network for serving the communication terminal based on the home network of the communication terminal.

Further, the network component 900 includes a controller 903 configured to initiate registration of the communication terminal in the communication network and/or establishment of a session for the communication terminal based on the determined core network component.

According to various embodiments, in other words, a communication terminal (e.g. a user equipment UE) indicates its home network when registering with a visited network and/or establishing a session with the visited network. The visited network determines a core network component (e.g. of a dedicated network slice) to serve the communication terminal and initiates registration of the communication terminal and/or session establishment in the communication network, e.g. with the determined core network component. The visited network determines the core network component based on the communication terminal's home network (which it, e.g. determiner 902, may determine from the indication of the communication terminal's home network) and possibly one or more further parameters indicated by the communication terminal, such as NSSAI. Registration of the communication terminal and/or session establishment based on the determined core network component may for example include that the determined core network component is allocated for serving the communication terminal.

In case of a registration request, the network component 900 may be a radio access network component like a base station.

In case of a session establishment request, the network component 900 may be a core network component of the communication network like an access and mobility management function (AMF), a session management function (SMF), a network slice selection function (NSSF) or a mobility management entity (MME).

The session establishment request is for example a PDU (protocol data unit) session establishment request. Accordingly, the establishment of a session may be the establishment of a PDU session for the communication terminal.

The communication terminal may send the indication of its home network with both a registration request and a (later) session establishment request. Possibly, it is not needed that the communication terminal sends the indication with the session establishment request since the network side (i.e. one or more components of the communication network) already have knowledge of its home network). In this case, the communication terminal may send the indication only along with (e.g. included in) the registration request.

The approach of figure 9 may for example allow a 5G System to redirect a roaming UE to a network slice dedicated for inbound roaming UEs or UEs belonging to a specific PLMN. It should be noted, however, that the communication network may also be configured according to other communication standards providing a radio access network and a core network (e.g. LTE, WiFi and others).

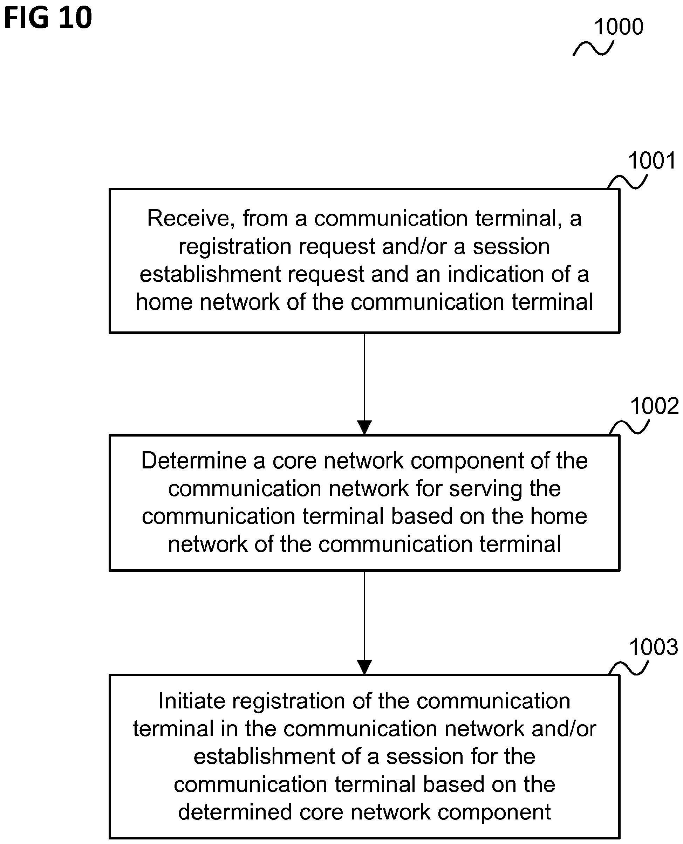

According to various embodiments, a method as illustrated in figure 10 is performed.

Figure 10 shows a flow diagram 1000 illustrating a method for serving a communication terminal by a communication network.

In 1001, a registration request and/or PDU Session Request and an indication of a home network of a communication terminal are received from the communication terminal.

In 1002, a core network component of the communication network for serving the communication terminal is determined based on the home network of the communication terminal.

In 1003, registration of the communication terminal in the communication network and/or establishment of a session for the communication terminal based on the determined core network component is initiated.

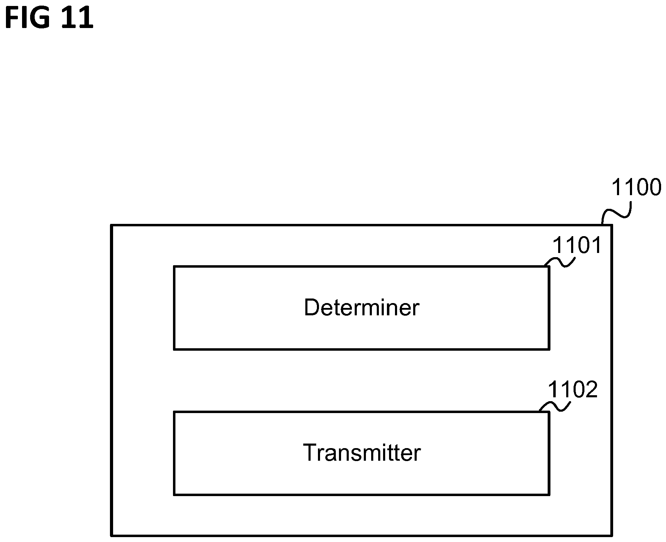

The network component for example receives the registration request and/or session establishment request from a communication terminal as illustrated in figure 11.

Figure 11 shows a communication terminal 1100.

The communication terminal 1100 includes a determiner 1101 configured to determine an identification of a home network of the communication terminal.

The communication terminal 1100 further includes a transmitter 1102 configured to transmit a registration request and/or a session establishment request along with an indication of the home network of the communication terminal to a visited communication network.

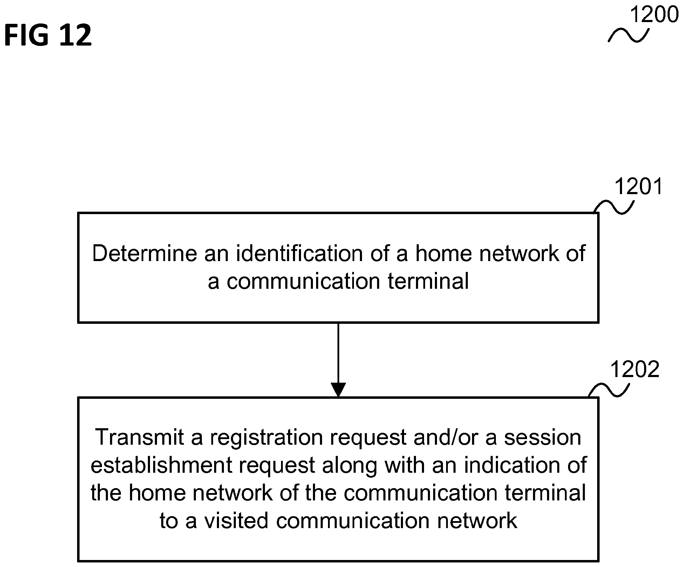

The communication terminal 1100 for example carries out a method as illustrated in figure 12.

Figure 12 shows a flow diagram 1200 illustrating a method for using a communication network.

In 1201, an identification of a home network of a communication terminal is determined.

In 1202, a registration request and/or a session establishment request along with an indication of the home network of the communication terminal is transmitted to a visited communication network.

Various examples are described below:
Example 1 is a network component of a communication network as illustrated in figure 9.
Example 2 is the network component of Example 1, wherein determining a core network component for serving the communication terminal based on the home network of the communication terminal comprises determining a core network slice of a core network of the communication network. Example 3 is the network component of Example 2, wherein the determiner is configured to determine, as the core network component, a core network component of the determined core network slice.
Example 4 is the network component of any one of Examples 1 to 3, wherein initiating registration of the communication terminal in the communication network and/or establishment of a session for the communication terminal based on the determined core network component comprises forwarding the registration request and/or the session establishment request to the determined core network component.
Example 5 is the network component of any one of Examples 1 to 4, wherein the core network component is an Access and Mobility Management Function, or a Session Management Function or a User Plane Function.
Example 6 is the network component of any one of Examples 1 to 5, being a radio access network component or a core network component of the communication network.
Example 7 is the network component of any one of Examples 1 to 6, wherein determining a core network component for serving the communication terminal based on the home network of the communication terminal comprises determining whether the communication terminal is a roaming terminal and determining the core network component for serving the communication terminal based on whether the communication terminal is a roaming terminal.
Example 8 is the network component of Example 7, wherein the determiner is configured to determine, as the core network component, a core network component of a core network slice of the communication network dedicated for serving roaming communication terminals if the communication terminal is a roaming communication terminal.
Example 9 is the network component of any one of Examples 1 to 8, wherein the determiner is configured to determine, as the core network component, a core network component of a core network slice dedicated for serving communication terminals of the communication terminal's home network.
Example 10 is the network component of any one of Examples 1 to 9, comprising a transmitter configured to transmit a registration response and/or a session establishment response to the communication terminal including an indication of a core network slice for serving the communication terminal, wherein the determined core network component belongs to the core network slice.
Example 11 is the network component of any one of Examples 1 to 10, wherein the receiver is further configured to receive an indication of an enterprise to which the communication terminal belongs and the determiner is configured to determine the core network component based on the enterprise to which the communication terminal belongs. Example 12 is the network component of Example 11, wherein the determiner is configured to determine, as the core network component, a core network component of a core network slice dedicated for serving communication terminals of the enterprise to which the communication terminal belongs.
Example 13 is the network component of any one of Examples 1 to 12, wherein the receiver is configured to receive information from a core network of the communication network about one or more core network components dedicated for serving communication terminals of the home network of the communication terminal and the determiner is configured to determine the core network component based on the information.
Example 14 is the network component of Example 13, wherein the information includes the indication of one or more core network components associated with one or more core network slices dedicated for serving communication terminals of the home network of the communication terminal.
Example 15 is the network component of any one of Examples 1 to 14, wherein the receiver is configured to receive a registration request message and/or a session establishment request message, wherein the registration request message and/or the session establishment request message includes the indication of the home network of the communication terminal from the communication terminal.
Example 16 is the network component of any one of Examples 1 to 15, wherein the determiner is configured to determine the core network component of the communication network for serving the communication terminal based on the home network of the communication terminal and based on one or more other parameters indicated by the communication terminal.
Example 17 is a method for serving a communication terminal by a communication network as illustrated in figure 10.
Example 18 is the method of Example 17, wherein determining a core network component for serving the communication terminal based on the home network of the communication terminal comprises determining a core network slice of a core network of the communication network.
Example 19 is the method of Example 18, comprising determining, as the core network component, a core network component of the determined core network slice.
Example 20 is the method of any one of Examples 17 to 19, wherein initiating registration of the communication terminal in the communication network and/or establishment of a session for the communication terminal based on the determined core network component comprises forwarding the registration request and/or the session establishment request to the determined core network component.
Example 21 is the method of any one of Examples 17 to 20, wherein the core network component is an Access and Mobility Management Function, or a Session Management Function or a User Plane Function.
Example 22 is the method of any one of Examples 17 to 21, being performed by a radio access network component or a core network component of the communication network.
Example 23 is the method of any one of Examples 17 to 22, wherein determining a core network component for serving the communication terminal based on the home network of the communication terminal comprises determining whether the communication terminal is a roaming terminal and determining the core network component for serving the communication terminal based on whether the communication terminal is a roaming terminal.
Example 24 is the method of Example 23, comprising determining, as the core network component, a core network component of a core network slice of the communication network dedicated for serving roaming communication terminals if the communication terminal is a roaming communication terminal.
Example 25 is the method of any one of Examples 17 to 24, comprising determining, as the core network component, a core network component of a core network slice dedicated for serving communication terminals of the communication terminal's home network.
Example 26 is the method of any one of Examples 17 to 25, comprising transmitting a registration response and/or a session establishment response to the communication terminal including an indication of a core network slice for serving the communication terminal, wherein the determined core network component belongs to the core network slice.
Example 27 is the method of any one of Examples 17 to 26, comprising receiving an indication of an enterprise to which the communication terminal belongs and determining the core network component based on the enterprise to which the communication terminal belongs.
Example 28 is the method of Example 27, comprising determining, as the core network component, a core network component of a core network slice dedicated for serving communication terminals of the enterprise to which the communication terminal belongs.
Example 29 is the method of any one of Examples 17 to 28, comprising receiving information from a core network of the communication network about one or more core network components dedicated for serving communication terminals of the home network of the communication terminal and determining the core network component based on the information.
Example 30 is the method of Example 29, wherein the information includes the indication of one or more core network components associated with one or more core network slices dedicated for serving communication terminals of the home network of the communication terminal.
Example 31 is the method of any one of Examples 17 to 30, comprising receiving a registration request message and/or a session establishment request message, wherein the registration request message and/or the session establishment request message includes the indication of the home network of the communication terminal from the communication terminal.
Example 32 is the method of any one of Examples 17 to 31, comprising determining the core network component of the communication network for serving the communication terminal based on the home network of the communication terminal and based on one or more other parameters indicated by the communication terminal.
Example 33 is a communication terminal as illustrated in figure 11.
Example 34 is the communication terminal of Example 33, wherein the registration request message and/or the session establishment request message includes the indication of the home network of the communication terminal from the communication terminal.
Example 35 is the communication terminal of Example 33 or 34, comprising a receiver configured to receive a registration response and/or a session establishment response from the visited communication network including an indication of a core network slice for serving the communication terminal.
Example 36 is a method for using a communication network as illustrated in figure 12.
Example 37 is the method of Example 36, wherein the registration request message and/or the session establishment request message includes the indication of the home network of the communication terminal.
Example 38 is the method of Example 36 or 37, comprising receiving a registration response and/or a session establishment response from the visited communication network including an indication of a core network slice for serving the communication terminal.

According to a further example, a method for associating a mobile radio terminal device with a network slice instance of a mobile radio communication network is provided, the method including
- receiving a request for registration and/or a request for session establishment at the mobile radio communication network from the mobile radio terminal device;
- determining whether the mobile radio terminal device is an inbound roamer UE or a non-roaming UE by the mobile radio communication network;
- selecting a network slice instance based on the information whether the mobile radio terminal device is an inbound roamer UE or a non-roaming UE; and
- forwarding the request sent by the mobile radio terminal device to the selected network slice instance.

The mobile radio communication network may include a mobile radio access network and a mobile core network. The mobile core network may include includes several network functions, e.g., an Access and Mobility Management Function (AMF), a Session Management Function (SMF), a Network Slice Selection Function (NSSF), etc.

The mobile core network may include several network slice instances, where each instance may have a complete set of mobile core network functions or a subset mobile core network functions.

The mobile core network may exchange information with the mobile radio access network about its setting whether a network function of a mobile core network supports inbound roamer UE or non-roaming UE.

The determining whether the mobile radio terminal device is an inbound roamer UE or a non-roaming UE can for example performed by considering the PLMN ID of the home network of the mobile radio terminal device.

It should be noted that one or more of the features of any of the examples above may be combined with any one of the other examples.

The components of the network component and the communication terminal (e.g. the receiver, the determiners, the controller and the transmitter) may for example be implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions described above may also be understood as a "circuit".

While specific aspects have been described, it should be understood by those skilled in the art that various changes in form and detail may be made therein without departing from the spirit and scope of the aspects of this disclosure as defined by the appended claims. The scope is thus indicated by the appended claims and all changes which come within the meaning and range of equivalency of the claims are therefore intended to be embraced.

## Claims

1. A network component of a communication network comprising:
A receiver configured to receive, from a communication terminal, a registration request and/or PDU Session establishment request and an indication of a home network of the communication terminal;
A determiner configured to determine a core network component of the communication network for serving the communication terminal based on the home network of the communication terminal; and
A controller configured to initiate registration of the communication terminal in the communication network and/or establishment of a session for the communication terminal based on the determined core network component.

2. The network component of claim 1, wherein determining a core network component for serving the communication terminal based on the home network of the communication terminal comprises determining a core network slice of a core network of the communication network.

3. The network component of claim 2, wherein the determiner is configured to determine, as the core network component, a core network component of the determined core network slice.

4. The network component of any one of claims 1 to 3, wherein initiating registration of the communication terminal in the communication network and/or establishment of a session for the communication terminal based on the determined core network component comprises forwarding the registration request and/or the session establishment request to the determined core network component.

5. The network component of any one of claims 1 to 4, wherein the core network component is an Access and Mobility Management Function, or a Session Management Function or a User Plane Function.

6. The network component of any one of claims 1 to 5, being a radio access network component or a core network component of the communication network.

7. The network component of any one of claims 1 to 6, wherein determining a core network component for serving the communication terminal based on the home network of the communication terminal comprises determining whether the communication terminal is a roaming terminal and determining the core network component for serving the communication terminal based on whether the communication terminal is a roaming terminal.

8. The network component of claim 7, wherein the determiner is configured to determine, as the core network component, a core network component of a core network slice of the communication network dedicated for serving roaming communication terminals if the communication terminal is a roaming communication terminal.

9. The network component of any one of claims 1 to 8, wherein the determiner is configured to determine, as the core network component, a core network component of a core network slice dedicated for serving communication terminals of the communication terminal's home network.

10. The network component of any one of claims 1 to 9, comprising a transmitter configured to transmit a registration response and/or a session establishment response to the communication terminal including an indication of a core network slice for serving the communication terminal, wherein the determined core network component belongs to the core network slice.

11. The network component of any one of claims 1 to 10, wherein the receiver is further configured to receive an indication of an enterprise to which the communication terminal belongs and the determiner is configured to determine the core network component based on the enterprise to which the communication terminal belongs.

12. The network component of any one of claims 1 to 11, wherein the determiner is configured to determine the core network component of the communication network for serving the communication terminal based on the home network of the communication terminal and based on one or more other parameters indicated by the communication terminal.

13. A method for serving a communication terminal by a communication network comprising:
Receiving, from a communication terminal, a registration request and/or a session establishment request and an indication of a home network of the communication terminal;
Determining a core network component of the communication network for serving the communication terminal based on the home network of the communication terminal; and
Initiating registration of the communication terminal in the communication network based on the determined core network component; and/or
Initiating establishment of a session for the communication terminal in the communication network based on the determined core network component.

14. A communication terminal comprising:
A determiner configured to determine an identification of a home network of the communication terminal; and
A transmitter configured to transmit a registration request and/or a session establishment request along with an indication of the home network of the communication terminal to a visited communication network.

15. A method for using a communication network comprising:
Determining an identification of a home network of a communication terminal; and
Transmitting a registration request and/or a session establishment request along with an indication of the home network of the communication terminal to a visited communication network.

## Amended claims

### Amended claims in accordance with Rule 137(2) EPC.

1. A network component of a communication network comprising:
A receiver (103) configured to receive, from a communication terminal (102), a registration request (808) and/or PDU Session establishment request and an indication of a home network of the communication terminal;
A determiner (804) configured to determine a core network component of the communication network (805) for serving the communication terminal based on the home network of the communication terminal comprising determining whether the communication terminal is a roaming terminal and determining the core network component for serving the communication terminal based on whether the communication terminal is a roaming terminal; and
A controller (804) configured to initiate registration of the communication terminal in the communication network and/or establishment of a session for the communication terminal based on the determined core network component;
wherein the determiner (804) is further configured to determine, as the core network component, a core network component shared by a plurality of core network slices of the communication network, wherein the core network component is exclusively dedicated for serving roaming communication terminals.

2. The network component of claim 1, wherein determining a core network component for serving the communication terminal based on the home network of the communication terminal comprises determining a core network slice of a core network of the communication network.

3. The network component of claim 2, wherein the determiner is configured to determine, as the core network component, a core network component of the determined core network slice.

4. The network component of any one of claims 1 to 3, wherein initiating registration of the communication terminal in the communication network and/or establishment of a session for the communication terminal based on the determined core network component comprises forwarding the registration request and/or the session establishment request to the determined core network component.

5. The network component of any one of claims 1 to 4, wherein the core network component is an Access and Mobility Management Function, or a Session Management Function or a User Plane Function.

6. The network component of any one of claims 1 to 5, being a radio access network component or a core network component of the communication network.

7. The network component of any one of claims 1 to 6, wherein the determiner is configured to determine, as the core network component, a core network component of a core network slice dedicated for serving communication terminals of the communication terminal's home network.

8. The network component of any one of claims 1 to 7, comprising a transmitter configured to transmit a registration response and/or a session establishment response to the communication terminal including an indication of a core network slice for serving the communication terminal, wherein the determined core network component belongs to the core network slice.

9. The network component of any one of claims 1 to 8, wherein the receiver is further configured to receive an indication of an enterprise to which the communication terminal belongs and the determiner is configured to determine the core network component based on the enterprise to which the communication terminal belongs.

10. The network component of any one of claims 1 to 9, wherein the determiner is configured to determine the core network component of the communication network for serving the communication terminal based on the home network of the communication terminal and based on one or more other parameters indicated by the communication terminal.

11. A method for serving a communication terminal by a communication network comprising:
Receiving, from a communication terminal, a registration request and/or a session establishment request and an indication of a home network of the communication terminal;
Determining a core network component of the communication network for serving the communication terminal based on the home network of the communication terminal; and
Initiating registration of the communication terminal in the communication network based on the determined core network component; and/or
Initiating establishment of a session for the communication terminal in the communication network based on the determined core network component;
wherein determining a core network component for serving the communication terminal based on the home network of the communication terminal comprises determining whether the communication terminal is a roaming terminal and
determining the core network component for serving the communication terminal based on whether the communication terminal is a roaming terminal;
further determining a core network component shared by core network slices of the communication network wherein the communication component is exclusively dedicated for serving roaming communication terminals.
